# EUROPEAN PATENT APPLICATION

(11) **EP 4 089 057 A1**
(43) Date of publication of application: **16.11.2022**
(21) Application number: 21198433.1
(22) Date of filing: 23.09.2021
(51) Int. Cl.: C02F 1/50, B05B 1/18, E03C 1/10, E03C 1/04, E03B 7/07

(54) **ANTIMICROBIAL DEVICE**

(30) Priority: 12.05.2021 GB 202106743; 07.06.2021 GB 202108127; 01.09.2021 EP 21194408
(71) Applicant: Challis Maritime Securities Limited, Berkshire SL6 9EH (GB)
(72) Inventor: CHALLIS, Russell Johnson, Cookham, SL6 9RT (GB)
(74) Representative: Hanson, William Bennett

(57) **Abstract**

A water conduit, such as a shower head 8 or a hose, includes an antimicrobial cartridge 10, 14 comprising a length of wire comprising antimicrobial metallic material. The wire is formed into a substantially cylindrical shape and fitted within the water conduit. There is a total clearance of at least 0.5 mm between the cartridge and an inner surface of the water conduit.

## Description

This invention relates to an antimicrobial cartridge for use with a conduit for a water outlet such as a tap (faucet), a shower head, a shower hose or a hose that connects a water supply to a tap.

In institutional situations, such as hospitals, universities, barracks, etc. a tap or shower head can become a breeding ground for microorganisms. Keeping the tap or shower head clean is problematic.

In the case of a tap, the problem is exacerbated by the fact that the tap will be located above a waste outlet from a sink. When the water flows directly from the tap to the waste, it can impact bacteria located in the waste. This can liberate an aerosol of bacteria, some of which can enter the tap and contaminate the water supply.

Known devices, such as those shown in GB-A-2 383 999 and GB-A- 2 395 944, comprise a cartridge including antimicrobial metallic material, such as silver-coated copper wire. Such devices may have an antimicrobial effect on water flowing through a conduit, but fail to address the build-up of biofilm that occurs on the inside of the conduit.

The present invention provides water conduit including an antimicrobial cartridge, the cartridge comprising a length of wire comprising antimicrobial metallic material, formed into a substantially cylindrical shape and located within the water conduit, wherein there is a total clearance of at least 0.5 mm between the cartridge and an inner surface of the water conduit.

"Total clearance" here means the total of clearances at both sides of the cartridge measured along any diameter thereof.

The clearance allows the cartridge to move laterally when water flows through the conduit, scarifying and removing any biofilm. The total clearance may be at least 1 mm and may be approximately 2 mm.

The antimicrobial metallic material may comprise silver and/ or copper. Thus, it may comprise silver-coated copper wire.

The cartridge may be housed within a sleeve having means for attaching the sleeve to a tap. In particular, the sleeve may be formed with an external thread for screwing to an internal thread of a tap, or the sleeve may be formed with an internal thread for screwing to an external thread of a tap.

The cartrdige can be elongate, the conduit comprising the stem of a shower head, a shower hose, or a hose used to connect a water supply to a tap in a sink or bath. For example the length to width ratio of the insert can be at least six or at least twelve, and can be up to fifty. An alternative or additional cartridge can be substantially disc shaped, the conduit comprisinga nozzle of a shower head. Both elongate and disc-shaped cartrdiges can be used within a single shower head.

The cartridge may be a "plug" that substantially fills an internal cross-section of the sleeve, shower head, or hose.

The invention will now be described in more detail, by way of example only, with reference to the accompanying drawings, in which:
Figure 1 shows an antimicrobial cartridge according to an embodiment of then invention;
Figure 2 shows a sleeve for containing the cartridge; and
Figure 3 is a schematic exploded view of a shower head embodiment of the invention.

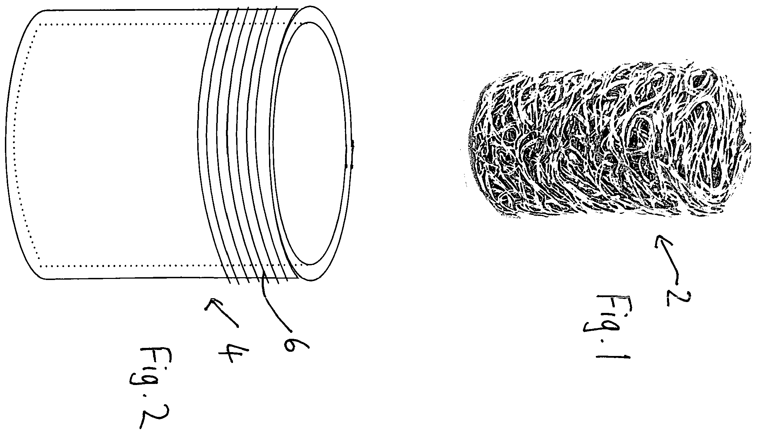

Figure 1 shows an antimicrobial cartridge 2 comprising silver-coated copper wire. A length of wire has been formed into a substantially cylindrical shape, forming an irregular internal "solid mesh" but with a substantially regular external shape.

Figure 2 shows a sleeve 4 for retaining the cartridge 2 of Figure 1. The cartridge is compressible so that it can be retained as a "plug" within the sleeve by spring force.

A screw thread 6 is provided externally at one end of the sleeve 4. Thus, the sleeve can be screwed into a tap outlet having an internal screw thread.

In an alternative version (not shown), the sleeve has an internal thread for screwing to an external thread of a tap.

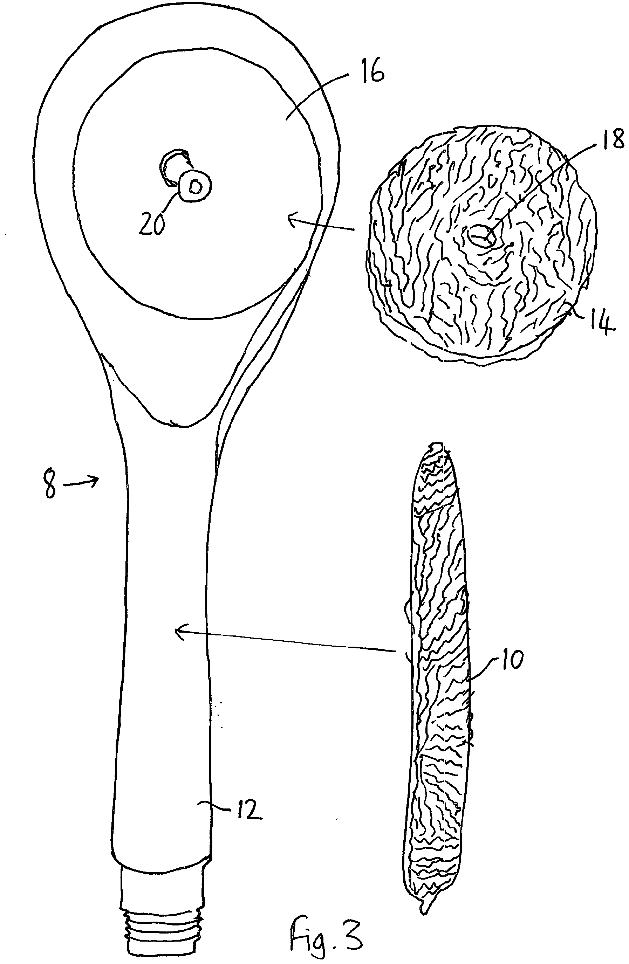

Figure 3 shows a shower head according to the invention. A housing 8 of the shower head is of conventional form.

A first insert (or "plug") 10 of silver-coated copper wire is elongate and is housed within the stem 12 of the shower head housing 8.

A second insert (or "plug") 14 of silver-coated copper wire is disc-shaped and is housed within the nozzle end 16 of the shower head housing 8. In this example the second insert 14 has a central hole 18 which fits around a screw 20 that fastens the nozzle of the shower head.

Whilst either of the inserts 10, 14 will be effective independently, antimicrobial activity is optimised if both are used together.

It will be appreciated that inserts (or "plugs") of any reasonable size and shape can be made according to the invention. As the inserts are flexible, they can be formed for use in a hose, in particular a shower hose or a supply hose for a tap. A fitted insert can extend along the entire length of a hose or a portion of the length.

The invention provides removable cartridges that can effectively eliminate microorganisms from water flowing into or out of a tap or shower and remove biofilms from an internal surface of the tap or shower head or hose.

## Claims

1. A water conduit comprising an antimicrobial cartridge, the cartridge comprising a length of wire comprising antimicrobial metallic material, formed into a substantially cylindrical shape and located within the water conduit, wherein there is a total clearance of at least 0.5 mm between the cartridge and an inner surface of the water conduit.

2. A water conduit according to claim 1, wherein the total clearance is at least 1 mm.

3. A water conduit according to claim 2, wherein the total clearance is approximately 2 mm.

4. Awater conduit according to claim 1, 2 or 3, wherein the antimicrobial metallic material comprises silver.

5. Awater conduit according to any preceding claim, wherein the antimicrobial metallic material comprises copper.

6. Awater conduit according to claim 5, wherein the antimicrobial metallic material comprises silver-coated copper wire.

7. Awater conduit according to any preceding claim, comprising a sleeve having means for attaching the sleeve to a tap.

8. Awater conduit according to claim 7, wherein the sleeve is formed with an external thread for screwing to an internal thread of a tap.

9. Awater conduit according to claim 7, wherein the sleeve is formed with an internal thread for screwing to an external thread of a tap.

10. Awater conduit according to any one of claims 1 to 6, comprising a stem of a shower head, wherein the cartridge is elongate.

11. Awater conduit according to any one of claims 1 to 6, comprising a nozzle of a shower head, wherein the cartridge is disc shaped.

12. Awater conduit according to any one of claims 1 to 6, comprising a hose, wherein the cartridge is elongate.

13. A water conduit according to claim 12, comprising a shower hose.

14. A water conduit according to claim 12, comprising a tap supply connection hose.
